# EUROPÄISCHE PATENTSCHRIFT

(11) **EP 3 083 348 B1**
(45) Veröffentlichungstag und Bekanntmachung des Hinweises auf die Patenterteilung: **17.02.2021**
(21) Anmeldenummer: 14821068.5
(22) Anmeldetag: 16.12.2014
(51) Int. Cl.: B60T 7/12, B60T 17/22

(54) **KRAFTFAHRZEUG**
MOTOR VEHICLE
VÉHICULE À MOTEUR

(30) Priorität: 19.12.2013 DE 102013021661
(43) Veröffentlichungstag der Anmeldung: 26.10.2016
(73) Patentinhaber: Audi AG, 85045 Ingolstadt (DE)
(72) Erfinder: GEISSENHÖNER, Martin, 85055 Ingolstadt (DE)
(86) Internationale Anmeldenummer: PCT/EP2014/003379
(87) Internationale Veröffentlichungsnummer: WO 2015/090568

(56) Entgegenhaltungen:
- EP-A1- 2 165 894
- DE-A1- 3 146 099
- DE-T2- 69 102 329

## Beschreibung

Die Erfindung betrifft ein Kraftfahrzeug, mit einem Automatikgetriebe mit einer P-Fahrstufe, einer N-Fahrstufe und einer oder mehreren Vorwärts- und Rückwärtsfahrstufen, einer elektrischen Parkbremseinrichtung, sowie einem Assistenzsystem zur Ausgabe einer Warninformation beim Öffnen der Fahrertür und Betätigen der Parkbremseinrichtung, wenn getriebeseitig nicht die P-Fahrstufe eingelegt wird.

Ein Kraftfahrzeug mit einem Automatikgetriebe mit einer P-Fahrstufe, einer N-Fahrstufe und einer oder mehreren Vorwärts- und Rückwärtsfahrstufen is z.B. aus DE 3146099 A bekannt.

Bei modernen Kraftfahrzeugen wird mittels eines Assistenzsystems überwacht, ob beim Verlassen des Fahrzeugs durch den Fahrer das Fahrzeug in einem sicheren Zustand vom Fahrer aktiv abgestellt wurde. Dieser sichere Zustand ist üblicherweise dann gegeben, wenn der Fahrer über seinen Wählhebel die P-Fahrstufe angewählt hat und diese im Automatikgetriebe auch eingelegt wurde. Mitunter wird die P-Fahrstufe vom Fahrer jedoch nicht angewählt. D. h., dass er den Motor abstellt, während sich der Wählhebel beispielsweise noch in der üblicherweise eingelegten D-Fahrstufe, also einer Vorwärtsfahrstufe, oder in der R-Fahrstufe, also der Rückwärtsfahrstufe befindet. Dies ist grundsätzlich möglich. Öffnet nun der Fahrer die Fahrertür, so wird dies aus Ausstiegsabsicht gedeutet, d. h., dass das Assistenzsystem annimmt, dass der Fahrer das Fahrzeug verlassen will. Das Öffnen der Fahrzeugtür wird über einen entsprechenden Sensor, mit dem die Steuerungseinrichtung des Assistenzsystems kommuniziert, ermittelt. Befindet sich nun der Wählhebel nicht in der P-Fahrstufe, so wird bei bisher bekannten Fahrzeugen einerseits eine Warninformation üblicherweise am Display des Kombiinstruments oder einem separaten Monitor optisch ausgegeben, beispielsweise in Form eines Textes oder einer Blinkinformation oder Ähnlichem, gegebenenfalls unterstützt von einem Tonsignal. Gleichzeitig wird die elektrische Parkbremseinrichtung aktiviert, die das Fahrzeug fixiert und sichert. Der Fahrer kann nun nochmals nachträglich aufgrund dieser Warninformation die P-Fahrstufe einlegen.

Tatsächlich ist das nachträgliche Einlegen der P-Fahrstufe jedoch nicht erforderlich, nachdem das Fahrzeug infolge des Zuschaltens der elektrischen Parkbremseinrichtung bereits in einem sicheren Zustand abgestellt ist. Die Ausgabe der Warninformation ist folglich unnötig bzw. mitunter sogar irreführend, da nicht jeder Fahrer sofort weiß, welche Handlung von ihm gefordert wird.

Der Erfindung liegt damit das Problem zugrunde, ein Kraftfahrzeug anzugeben, das demgegenüber verbessert ist.

Zur Lösung dieses Problems ist in einer ersten Erfindungsalternative ein Kraftfahrzeug gemäß Anspruch 1 und in einer zweiten Erfindungsalternative ein Kraftfahrzeug gemäß Anspruch 2 vorgesehen.

Erfindungsgemäß ist das Assistenzsystem nach wie vor zur Ausgabe einer Warninformation beim Öffnen der Fahrertür und gleichzeitigem Betätigen der Parkbremseinrichtung ausgelegt, wenn getriebeseitig nicht die P-Fahrstufe eingelegt worden ist. Die Warninformation wird aber nur dann ausgegeben, wenn die elektrische Parkbremse in diesem Fall nicht eingelegt werden konnte, weil das elektrische Parkbremssystem bereits einen Funktionsdefekt aufweist, oder nicht fehlerfrei eingelegt werden konnte, wenn also während der Ansteuerung der elektrischen Parkbremseinrichtung ein Fehler auftrat, und es aufgrund dieses Fehlers nicht sichergestellt ist, dass die elektrische Parkbremse auch tatsächlich komplett angezogen wurde, oder wenn die Parkbremse vom Fahrer zuvor aktiv "überstimmt" wurde, z.B. beim Rangieren, wobei der Fahrer die Parkbremse wieder löst und dann die Tür öffnet, um nach außen zu schauen. D. h., dass erfindungsgemäß die Warninformation nur dann gegeben wird, wenn das Fahrzeug nicht gebremst und damit nicht gesichert wurde bzw. kein sicherer Zustand gegeben ist, was dann der Fall ist, wenn beim Betätigen der Parkbremseinrichtung ein Fehler aufgetreten ist und die Parkbremseinrichtung nicht oder nicht vollständig aktiviert werden konnte.

Hierüber wird vorteilhaft erreicht, dass keine unnötige Ausgabe einer Warninformation erfolgt, also die Warninformation nicht ausgegeben wird, wenn sie aufgrund des Einnehmens eines sicheren Zustands nicht erforderlich ist. Dann und nur dann, wenn der sichere Zustand nicht eingenommen wurde bzw. es aufgrund eines Fehlers im laufenden Anziehbetrieb der Parkbremse nicht sichergestellt ist, dass diese vollständig angezogen wurde, wird die Warninformation ausgegeben.

In Weiterbildung der Erfindung kann die Ausgabe der Warninformation erst nach Ablauf eines vorbestimmten Zeitintervalls nach Erfassung eines Türöffnungsvorgangs gebbar sein. Öffnet der Fahrer die Fahrertür und wird dies über einen entsprechenden Sensor erfasst, so wird umgehend geprüft, ob die P-Fahrstufe eingelegt ist. Ist dies nicht der Fall, wird wiederum umgehend die elektrische Parkbremseinrichtung angesteuert. Da diese je nach Ausgestaltung mitunter eine gewisse Zeit benötigt, um das Fahrzeug komplett festzubremsen, also den sicheren Zustand zu gewährleisten, wird die Warninformation etwas zeitverzögert ausgegeben. Das Zeitintervall ist so bemessen, dass innerhalb des Zeitintervalls die elektrische Parkbremse in jedem Fall komplett angezogen werden kann. Erfolgt dies innerhalb des Zeitintervalls nicht oder wird innerhalb des Zeitintervalls eine entsprechende Fehlerinformation gegeben, dass die Parkbremse nicht fehlerfrei betätigt werden konnte, erfolgt nach Ablauf des Zeitintervalls die Ausgabe der Warninformation. Dieses Zeitintervall kann bei Erfassen des Türöffnungsvorgangs angestoßen werden. Es beträgt beispielsweise 1 - 3 Sekunden, wobei es wie ausgeführt in Abhängigkeit der regulären Funktionsdauer der Parkbremseinrichtung, die diese bis zum Einnehmen der Endstellung benötigt, bemessen wird.

In der zweiten Erfindungsalternative ist erfindungsgemäß vorgesehen, dass die Warninformation bei Erfassung eines Türöffnungsvorgangs und eingelegter N-Fahrstufe sofort gebbar ist. D. h., dass stets sofort die Warninformation ausgegeben wird, wenn der Türöffnungsvorgang erfasst wird und dass die Steuerungseinrichtung des Assistenzsystems ferner erfasst, dass zu diesem Zeitpunkt die N-Fahrstufe, also die Neutralfahrstufe bzw. der Leerlauf eingelegt ist. Da die N-Fahrstufe mitunter bewusst eingelegt wurde, beispielsweise um das Fahrzeug zu verschieben oder Ähnliches, wird in diesem Fall die elektrische Parkbremseinrichtung nicht automatisch zum Festbremsen des Fahrzeugs angesteuert. Da in diesem Fall also keine automatische Sicherungsfunktion greift, kann der Fahrer sofort gewarnt werden, wenn eine Verlassensabsicht durch Erfassung der Türöffnung detektiert wird, da in diesem Fall keine Rückfallebene über die Parkbremseinrichtung gegeben ist.

Weitere Vorteile, Merkmale und Einzelheiten der Erfindung ergeben sich aus dem im Folgenden beschriebenen Ausführungsbeispiel.

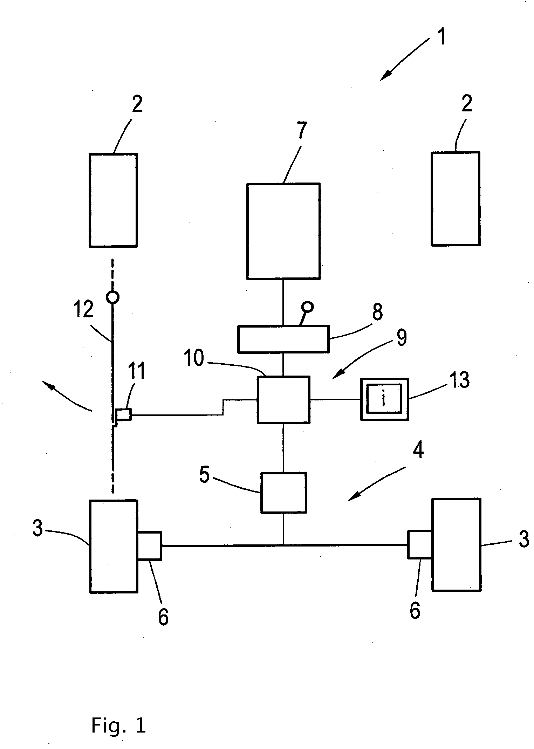

In der Figur ist eine Prinzipdarstellung eines erfindungsgemäßen Kraftfahrzeugs 1 gezeigt, umfassend vier Räder 2, 3, wobei es sich bei den Rädern 2 um Vorderräder und bei den Rädern 3 um Hinterräder handelt. Den Rädern 3 ist eine elektrische Parkbremseinrichtung 4 zugeordnet, umfassend exemplarisch ein Steuergerät 5 und radseitig vorgesehene Aktoren 6, die über die Steuerungseinrichtung 5 angesteuert werden können. Über sie ist es möglich, die dortige Bremseinrichtung, beispielsweise eine Scheibenbremseinrichtung, zu betätigen oder selbsttätig ein Bremselement an die Bremsscheibe zu fahren etc. Dem Fachmann ist der Aufbau und die grundsätzliche Funktionsweise einer elektrischen Parkbremseinrichtung hinreichend bekannt.

Vorgesehen ist des Weiteren ein Automatikgetriebe 7 mit zugeordnetem Wählhebel 8, der vom Fahrer zu betätigen ist und über den durch entsprechendes Verschieben in die ausgezeichnete Stellungen diverse Fahrstufen angewählt werden können, so üblicherweise eine P-Fahrstufe (= Parkstufe), eine N-Fahrstufe (= Neutralstufe), eine R-Fahrstufe (= Rückwärtsfahrstufe) und eine D-Fahrstufe (= Vorwärtsfahrstufe). Getriebeseitig werden die entsprechenden Fahrstufen elektrisch gesteuert eingestellt, was ebenfalls hinreichend bekannt ist.

Vorgesehen ist des Weiteren ein Assistenzsystem 9 umfassend eine Steuerungseinrichtung 10, die dazu dient, den Fahrer, der im Begriff ist, das Kraftfahrzeug 1 zu verlassen, über eine Warninformation zu warnen, wenn das Fahrzeug in einem nicht gesicherten Zustand ist. Zu diesem Zweck kommuniziert die Steuerungseinrichtung 10 mit einem Sensor 11, der der Fahrertür 12 zugeordnet ist, die wie durch den Pfeil dargestellt ist geöffnet werden kann. Über den Sensor 11, einen entsprechenden Türsensor oder Türkontakt, wird erfasst, sobald die Fahrertür 12 geöffnet wird. Die Steuerungseinrichtung 10 kommuniziert des Weiteren im gezeigten Beispiel mit dem Wählhebel 8, d. h., dass die jeweilige angewählte Fahrstufe vom Wählhebel 8 eingelesen wird und auf einen hier nicht näher gezeigten Bus gegeben wird, wo es von der Steuerungseinrichtung erfasst wird (alternativ kann das Fahrstufensignal auch von einem Getriebesteuergerät generiert und auf den Bus gegeben werden). Handelt es sich bei der im Zeitpunkt der Erfassung der Türöffnung angewählten respektive eingelegten Fahrstufe um die P-Fahrstufe, so ist das Fahrzeug in einem sicheren Zustand, die Ausgabe einer Warninformation bzw. die Ansteuerung der elektrischen Parkbremseinrichtung 4 über die Steuerungseinrichtung 10 ist nicht erforderlich.

Ist im Zeitpunkt der Erfassung der Türöffnung jedoch beispielsweise die R- oder die D-Fahrstufe eingelegt, so ist getriebeseitig keine definierte Sperre aktiv, wie dies im Falle der P-Fahrstufe der Fall wäre. Um das Fahrzeug dennoch in einem sicheren Zustand abzustellen wird nun unmittelbar mit Erfassen der Türöffnung und Erfassen der eingelegten R- oder D-Fahrstufe die elektrische Parkbremseinrichtung 4, hier also die Steuerungseinrichtung 5 angesteuert, damit über die Aktoren 6 die Hinterräder 3 festgesetzt werden. Ergibt sich während dieser Ansteuerung respektive während des Betriebs der Parkbremseinrichtung, dass diese korrekt aktiviert wurde und korrekt gearbeitet hat, mithin also die Hinterräder 3 festgesetzt sind, so ist ein sicherer Zustand gegeben. Das Fahrzeug ist also abgesichert, obwohl die P-Fahrstufe nicht eingelegt ist. Die Ausgabe einer Warninformation ist in diesem Fall nicht erforderlich.

Ergibt sich jedoch beim Ansteuern der Parkbremseinrichtung 4 respektive während des Anziehbetrieb ein Fehler derart, dass die Parkbremseinrichtung 4 entweder nicht angesteuert werden kann oder selbst eine Fehlermeldung zurücksendet oder während des Betriebs der Aktoren 6 ein Fehler auftritt, oder dass die zuvor eingelegte Parkbremse vom Fahrer aktiv gelöst und anschließend die Tür geöffnet wird, so ist das Fahrzeug entweder nicht gesichert, wenn die Parkbremseinrichtung 4 überhaupt nicht betätigt werden kann oder wieder gelöst wurde, oder es ist bei auftretendem Fehler während des Anziehens nicht sichergestellt, dass sie das Fahrzeug vollständig und korrekt festgebremst hat. In diesem Fall ist also kein sicherer Zustand gegeben. Nachdem das Fahrzeug wie ausgeführt nicht über die P-Fahrstufe abgesichert ist, ist nun die Ausgabe einer Warninformation an einem Display 13 angezeigt, wobei die Warninformation hier mit "i" dargestellt ist. D. h., dass dem Fahrer die Warninformation nur gegeben wird, wenn nicht sichergestellt ist, dass das Fahrzeug über die elektrische Parkbremseinrichtung 4 in einen sicheren Zustand festgebremst werden konnte, wenn die P-Fahrstufe nicht eingelegt ist.

Erfasst die Steuerungseinrichtung 10 nach Gabe eines Türöffnungssignals, dass die N-Fahrstufe eingelegt ist, so wird über die Steuerungseinrichtung 10 kein Steuersignal an die elektrische Parkbremseinrichtung 4 gegeben, nachdem in diesem Fall kein automatisches Festbremsen über die Parkbremseinrichtung 4 erfolgen soll. Denn der Fahrer soll die Möglichkeit haben, das Fahrzeug durchaus bewusst mit der N-Fahrstufe abzustellen. In diesem Fall wird mit Erfassung des Türöffnungsvorgangs unmittelbar an dem Display 13 die Warninformation "i" ausgegeben. Denn in diesem Fall ist keine automatische Rückfallebene über die Parkbremseinrichtung 4 gegeben.

## Patentansprüche

1. Kraftfahrzeug, mit einem Automatikgetriebe (7) mit einer P-Fahrstufe, einer N-Fahrstufe und einer oder mehreren Vorwärts- und Rückwärtsfahrstufen,
**dadurch gekennzeichnet,**
**dass** eine elektrische Parkbremseinrichtung (4) sowie ein Assistenzsystem (9) zur Ausgabe einer Warninformation beim Öffnen der Fahrertür (12) und Ansteuern der Parkbremseinrichtung (4), wenn getriebeseitig nicht die P-Fahrstufe eingelegt wurde, vorgesehen sind, wobei die Warninformation (i) nur ausgegeben wird, wenn die Parkbremseinrichtung (4) nicht oder nicht fehlerfrei aktiviert werden konnte.

2. Kraftfahrzeug, mit einem Automatikgetriebe (7) mit einer P-Fahrstufe, einer N-Fahrstufe und einer oder mehreren Vorwärts- und Rückwärtsfahrstufen,
**dadurch gekennzeichnet,**
**dass** eine elektrische Parkbremseinrichtung (4) sowie ein Assistenzsystem (9) zur Ausgabe einer Warninformation beim Öffnen der Fahrertür (12) und Ansteuern der Parkbremseinrichtung (4), wenn getriebeseitig die oder eine Vorwärts- oder Rückwärts-Fahrstufe eingelegt wurde, vorgesehen sind, wobei die Warninformation (i) bei eingelegter Vorwärts- oder Rückwärts-Fahrstufe nur ausgegeben wird, wenn die Parkbremseinrichtung (4) nicht oder nicht fehlerfrei aktiviert werden konnte, und wobei die Warninformation (i) bei Erfassung eines Türöffnungsvorgangs und eingelegter N-Fahrstufe sofort gebbar ist.

3. Kraftfahrzeug nach Anspruch 1 oder 2,
**dadurch gekennzeichnet,**
**dass** die Ausgabe der Warninformation (i) erst nach Ablauf eines vorbestimmten Zeitintervalls nach Erfassung eines Türöffnungsvorgangs gebbar ist.

## Claims

1. Motor vehicle, with an automatic transmission (7) with a P-drive position, an N-drive position, and one or more forward and reverse drive positions,
**characterised in that**
an electric parking brake device (4) and an assistance system (9) are provided for outputting warning information on opening the driver's door (12) and for activating the parking brake device (4) if the P-drive stage has not been engaged in the transmission, wherein the warning information (i) is output only if the parking brake device (4) could not be activated or could not be activated in a fault-free manner.

2. Motor vehicle, with an automatic transmission (7) with a P-drive position, an N-drive position, and one or more forward and reverse drive positions,
**characterised in that**
an electric parking brake device (4) and an assistance system (9) are provided for outputting warning information on opening the driver's door (12) and for activating the parking brake device (4), if the or a forward or reverse drive position has been engaged in the transmission, wherein the warning information (i) with an engaged forward or reverse drive position is output only if the parking brake device (4) could not be activated or could not be activated in a fault-free manner, and wherein the warning information (i) is provided immediately on detection of a door opening process and the engagement of an N-drive position.

3. Motor vehicle according to claim 1 or 2,
**characterised in that**
the output of warning information (i) is only provided after the expiry of a predetermined time interval after detecting a door opening process.

## Revendications

1. Véhicule automobile, avec une transmission automatique (7) avec un rapport P, un rapport N et un ou plusieurs rapports de marche avant et arrière,
**caractérisé en ce**
**qu'**un dispositif électrique de frein de stationnement (4) ainsi qu'un système d'assistance (9) sont prévus pour émettre une information d'avertissement lors de l'ouverture de la porte conducteur (12) et de l'actionnement du dispositif de frein de stationnement (4) si le rapport P n'a pas été enclenché côté transmission, dans lequel l'information d'avertissement (i) n'est émise que si le dispositif de frein de stationnement (4) n'a pas pu être activé ou être activé sans erreur.

2. Véhicule automobile, avec une transmission automatique (7) avec un rapport P, un rapport N et un ou plusieurs rapports de marche avant et arrière,
**caractérisé en ce**
**qu'**un dispositif électrique de frein de stationnement (4) ainsi qu'un système d'assistance (9) sont prévus pour émettre une information d'avertissement lors de l'ouverture de la porte conducteur (12) et de l'actionnement du dispositif de frein de stationnement (4) si le ou un rapport de marche avant ou arrière a été enclenché côté transmission, dans lequel l'information d'avertissement (i) n'est émise que lorsque la marche avant ou arrière est enclenchée si le dispositif de frein de stationnement (4) n'a pas pu être activé ou être activé sans erreur, et dans lequel l'information d'avertissement (i) peut être émise immédiatement après la détection d'un processus d'ouverture de porte et de l'engagement du rapport N.

3. Véhicule automobile selon la revendication 1 ou 2,
**caractérisé en ce**
**que** l'émission de l'information d'avertissement (i) ne peut être effectuée qu'après l'écoulement d'un intervalle de temps prédéterminé après la détection d'un processus d'ouverture de porte.
